# FASCICULE DE BREVET EUROPEEN

(11) **EP 1 179 469 B1**
(45) Date de publication et mention de la délivrance du brevet: **10.11.2004**
(21) Numéro de dépôt: 01401922.8
(22) Date de dépôt: 18.07.2001
(51) Int. Cl.: B62D 1/10

(54) **Colonne de direction pour un système de direction de véhicule automobile**
Lenksäule für ein Kraftfahrzeuglenksystem
Steering column for a motor vehicle steering system

(30) Priorité: 04.08.2000 FR 0010341
(43) Date de publication de la demande: 13.02.2002
(73) Titulaire: Autoliv-Isodelta, 86190 Chire-en-Montreuil (FR)
(72) Inventeur: Groleau, Laurent, 86190 Latille (FR)
(74) Mandataire: Santarelli

(56) Documents cités:
- FR-A- 2 775 036
- US-A- 2 038 554

## Description

La présente invention concerne une colonne de direction pour un système de direction de véhicule automobile selon le préambule des revendication 1, 9 et 16 (voir FR-A-2 775 036).

Elle concerne plus particulièrement l'assemblage entre la partie terminale de la colonne de direction et le moyeu d'un volant.

On sait qu'un tel moyeu présente classiquement :
- un alésage garni de cannelures orientées suivant une direction axiale, adapté à s'engager par coulissement, suivant cette direction, sur la partie terminale de la colonne, elle-même garnie de cannelures correspondantes ;
- une surface de butée adaptée à venir porter sur une surface d'arrêt correspondante de la colonne pour arrêter le mouvement d'enfoncement du moyeu vis-à-vis de la colonne suivant la direction axiale ; et
- une surface d'appui, opposée à la surface de butée, adaptée à être mise en prise par un écrou ou par la tête d'une vis prévu(e) pour être engagé(e) sur une tige filetée ou sur un taraudage que comporte la colonne, le serrage de la vis ou de l'écrou enserrant le moyeu entre la surface d'arrêt de la colonne, sur laquelle porte la surface de butée du moyeu, et l'écrou ou la tête de la vis qui porte sur la surface d'appui du moyeu.

L'inconvénient des dispositifs de l'art antérieur est que la suppression du jeu entre la colonne de direction et le moyeu du volant est liée au serrage d'une vis. Il existe également des systèmes de fixation d'un volant sur une colonne dans lesquels le volant est encliqueté sur la colonne. Dans ces systèmes, le jeu n'est supprimé qu'à partir du moment où une contrainte est exercée pour plaquer le moyeu du volant sur la colonne de direction. De ce fait, lorsque la liaison vissée se desserre ou lorsque la précontrainte diminue (fatigue d'un ressort), un jeu risque d'apparaître entre la colonne de direction et le volant.

La présente invention a alors pour but de fournir un système permettant de diminuer le risque de jeu entre la colonne et son volant.

A cet effet, elle propose une colonne de direction présentant une forme générale sensiblement cylindrique circulaire comportant un axe longitudinal ainsi qu'une extrémité destinée à coopérer avec un moyeu de volant en vue de la fixation du volant sur la colonne.

Selon l'invention, l'extrémité de la colonne destinée à coopérer avec le volant présente au moins deux évidements longitudinaux sur sa surface extérieure, et chaque évidement présente une largeur, mesurée périphériquement, qui diminue en s'éloignant de l'extrémité libre de la colonne de direction, de telle sorte qu'en vue de côté de la colonne l'évidement présente une forme en V.

La forme géométrique de cette colonne de direction et de ses évidements permet de réaliser un coincement lorsqu'une pièce de forme complémentaire est emboîtée par coulissement sur la colonne. Grâce à ce coincement, les jeux entre la colonne de direction et la pièce complémentaire, un moyeu de volant généralement, sont supprimés. On réalise ainsi un coincement comparable à celui obtenu avec un cône morse. Pour permettre un bon coincement, l'angle formé par les branches du V est avantageusement compris entre 5° et 25°.

Pour permettre un centrage de la pièce venant coulisser sur la partie terminale de la colonne de direction par rapport à cette dernière, la largeur de chaque évidement, mesurée périphériquement, diminue de préférence également en se rapprochant de l'axe de la colonne. Dans ce cas, les parois de l'évidement se faisant face sont avantageusement inclinées de telle sorte qu'en section transversale, elles forment un V tronqué dont la pointe se trouverait entre l'axe de la colonne et l'évidement.

Dans une forme de réalisation préférée, chaque évidement est symétrique par rapport à un plan radial contenant l'axe de la colonne de direction. Ces évidements sont avantageusement équi-répartis à la périphérie de l'extrémité de la colonne de direction pour permettre une meilleure répartition des efforts lorsqu'un couple doit être transmis du volant vers la colonne de direction.

Pour permettre la fixation d'un volant sur la colonne de direction, celle-ci comporte par exemple du côté de son extrémité libre un embout d'encliquetage présentant une surface d'extrémité se raccordant à une surface latérale tronconique dont la base de plus grand diamètre se trouve du côté de l'extrémité libre de la colonne de direction. Le volant est alors muni de moyens de verrouillage complémentaires.

Dans une forme de réalisation préférée, la colonne de direction selon l'invention est obtenue par martelage.

La présente invention concerne également un volant de direction pour véhicule comportant un moyeu présentant :
- un alésage débouchant à l'extérieur du volant et adapté à recevoir par coulissement, depuis l'extérieur et suivant une direction axiale, une partie terminale d'une colonne de direction que comporte le véhicule, et
- des moyens permettant la fixation du volant sur la colonne de direction.

Selon l'invention, l'alésage présente au moins deux nervures s'étendant axialement à l'intérieur de l'alésage, et chaque nervure présente une largeur, mesurée périphériquement, qui diminue en s'éloignant de l'extrémité libre de la colonne de direction, de telle sorte qu'en vue de côté de la colonne la nervure présente une forme en V. Un tel volant est complémentaire d'une colonne de direction telle que décrite ci-dessus. Pour un bon coincement du volant sur une colonne de direction, l'angle formé par les branches du V est de préférence compris entre 5° et 25°.

Pour réaliser le centrage du volant sur la colonne de direction, une forme de réalisation prévoit que la largeur de chaque nervure, mesurée périphériquement, diminue également en se rapprochant de l'axe de l'alésage. Dans ce cas, les parois de la nervure se faisant face sont avantageusement inclinées de telle sorte qu'en section transversale, ces parois forment un V tronqué dont la pointe se trouverait entre l'axe de l'alésage et la nervure.

De préférence, chaque nervure est symétrique par rapport à un plan radial contenant l'axe de l'alésage et les nervures sont avantageusement équi-réparties à la périphérie de l'alésage.

Pour une bonne fixation du volant sur une colonne de direction, les moyens permettant la fixation du volant sur la colonne de direction comportent par exemple au moins une cale d'encliquetage destinée à coopérer avec une partie terminale de la colonne de direction, un moyen élastique étant prévu au niveau de chaque cale d'encliquetage pour la précontraindre vers la colonne de direction en position verrouillée.

Enfin, l'invention concerne également un système de direction pour véhicule, comportant :
- une colonne de direction présentant une forme générale sensiblement cylindrique circulaire comportant un axe longitudinal ainsi qu'une extrémité destinée à coopérer avec un moyeu de volant en vue de la fixation du volant sur la colonne, et
- un volant comportant un moyeu présentant :
- un alésage débouchant à l'extérieur du volant et adapté à recevoir par coulissement, depuis l'extérieur et suivant une direction axiale, une partie terminale d'une colonne de direction que comporte le véhicule, et
- des moyens permettant la fixation du volant sur la colonne de direction.

Selon l'invention, la colonne de direction et le volant sont une colonne et un volant tels que décrits plus haut.

Une forme de réalisation préférée prévoit que pour le système de direction pour véhicule selon l'invention, les évidements réalisés sur la colonne de direction et les nervures réalisées dans l'alésage du moyeu du volant sont tels que d'une part les nervures ne viennent pas au contact du fond des évidements et d'autre part les zones pleines entre les évidements ne viennent pas au contact de la paroi de l'alésage sur laquelle sont disposées les nervures. De cette manière seules les parois latérales des évidements et des nervures sont en contact. Ceci permet de maîtriser parfaitement la liaison entre le moyeu du volant et la colonne de direction et évite de créer un coincement ailleurs qu'au niveau des parois latérales des évidements et nervures.

La description qui suit permettra, en référence au dessin annexé, de mieux comprendre les buts et avantages de l'invention. Il est clair que cette description n'est donnée qu'à titre d'exemple, et n'a pas de caractère limitatif.
Figure 1 est une vue en perspective, partiellement coupée d'une liaison entre une colonne de direction et un moyeu de volant selon l'invention,
Figure 2 est une vue en perspective de dessous du moyeu de volant représenté en coupe sur le figure 1,
Figure 3 est une vue de face de l'extrémité de colonne de direction représentée sur la figure 1,
Figure 4 est une vue en coupe selon la ligne de coupe IV-IV de la figure 3, et
Figure 5 est une vue en coupe selon la ligne de coupe V-V de la figure 3.

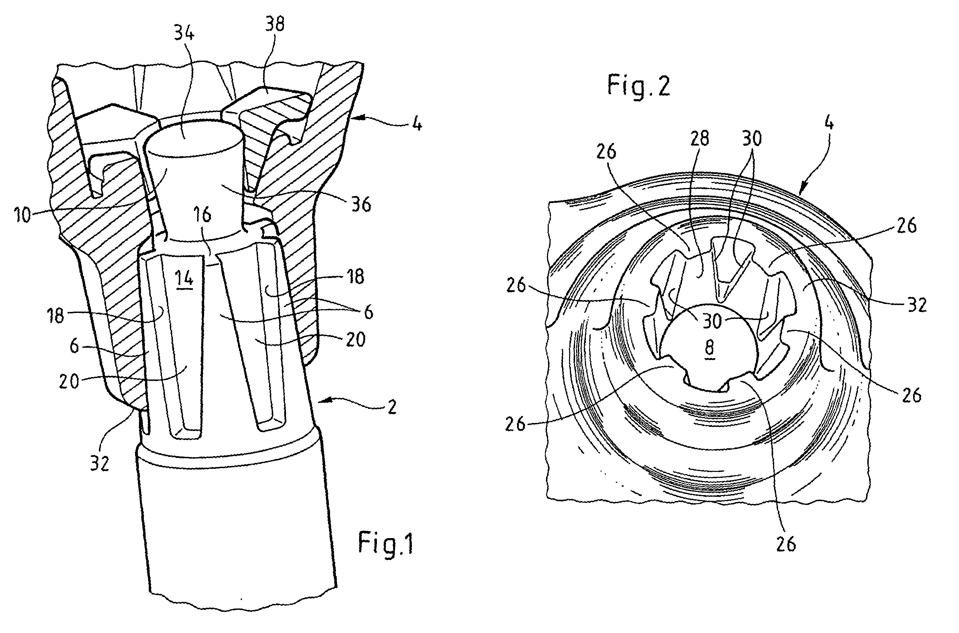

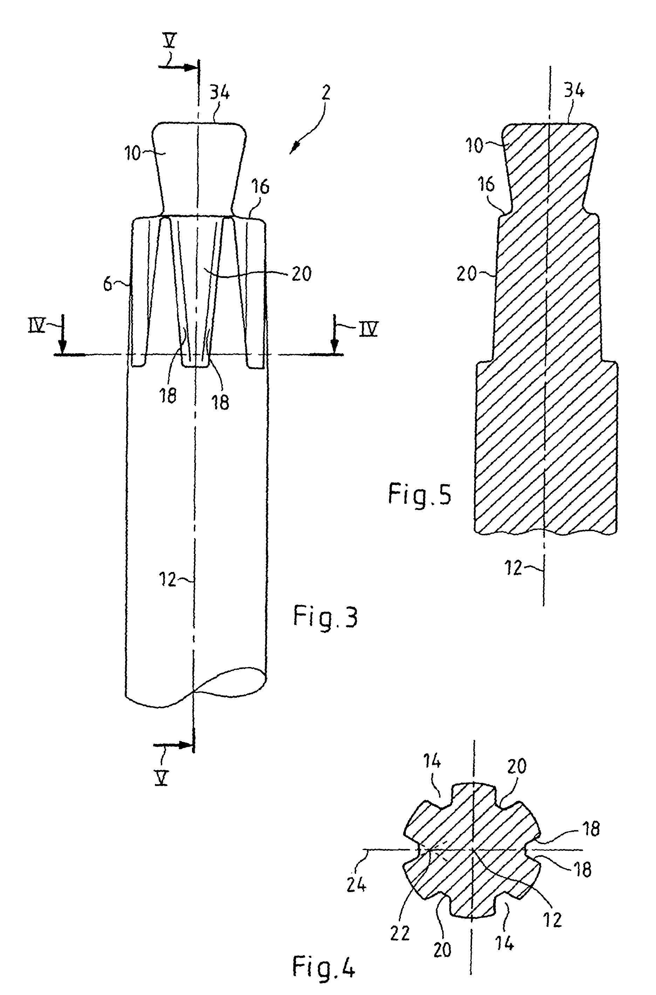

La figure 1 montre un système de direction comportant une colonne de direction dont une partie terminale 2 est montrée en détail sur les figures 3 à 5 ainsi qu'un volant de direction dont on a essentiellement représenté le moyeu 4.

La partie terminale 2 de la colonne de direction comporte une zone de liaison 6 destinée à coopérer avec un alésage 8 réalisé dans le moyeu afin d'assurer une liaison sans jeu entre la colonne de direction et le volant.

Au delà de la zone de liaison 6, la colonne de direction présente du côté de son extrémité libre correspondante un embout d'encliquetage 10 destiné à permettre le verrouillage du volant sur la colonne de direction.

La colonne de direction dans sa zone terminale se présente sous la forme d'une barre cylindrique circulaire d'axe 12. La zone de liaison 6 présente à sa périphérie six évidements 14 équi-répartis autour de la colonne de direction. Ces évidements s'étendent longitudinalement et débouchent dans une face 16 de la partie terminale 2. Cette face 16 est la face de la partie terminale portant l'embout d'encliquetage 10. Chaque évidement 14 présente deux parois latérales 18, et un fond 20.

Les parois latérales 18 présentent une double inclinaison. Tout d'abord, elles sont inclinées de manière à converger l'une vers l'autre et à présenter une forme de V en vue de côté (Cf figure 3). On constate ainsi que les arêtes correspondant à l'intersection des parois latérales 18 avec le fond 20 ou avec la surface extérieure de la colonne de direction forme deux V. Les V sont symétriques par rapport à l'axe 12 et divergent du côté de la face terminale 16. Ainsi, la largeur de l'évidement 14 diminue lorsque l'on s'éloigne de la face terminale 16.

La section transversale de la zone de liaison 6 montrée sur la figure 4 montre que les parois latérales 18 ne sont pas des parois radiales mais présentent une convergence vers un point situé entre l'axe 12 et l'évidement 14. On a représenté sur la figure 4 en traits pointillés le prolongement de la trace de deux parois latérales 18 d'un évidement 14 sur le plan de coupe. Les prolongements de ces traces se coupent en un point 22 situé sur un axe de symétrie 24 de la zone de liaison entre l'axe 12 et le fond 20 de l'évidement.

Le moyeu 4 présente au niveau de son alésage 8 des nervures 26 correspondant aux évidements 14 et destinées à coopérer avec ceux-ci.

L'alésage 8 présente donc à sa périphérie six nervures 26 équi-réparties et s'étendant longitudinalement. Ces nervures 26 font saillie vers l'intérieur de l'alésage 8. Chaque nervure 26 présente donc du côté de l'intérieur de l'alésage 8 un sommet 28 auquel sont rattachées deux surfaces latérales 30. Comme pour les parois latérales 18 des évidements 14, ces surfaces latérales 30 sont inclinées par rapport à l'axe de l'alésage 8 et inclinées par rapport à une surface radiale. L'axe de l'alésage 8 n'est pas représenté au dessin mais lorsque le moyeu est engagé sur la colonne de direction 2 comme représenté sur la figure 1, l'axe de l'alésage 8 est confondu avec l'axe 12 de la colonne de direction. On retrouve pour les surfaces latérales les mêmes inclinaisons que pour les parois latérales 18 des évidements 14. Ainsi, la largeur des nervures 26, mesurée périphériquement, va en augmentant lorsque l'on s'éloigne de l'extérieur du volant. On considère ici que le volant s'engage sur la colonne de direction à partir de sa face extérieure portant la référence 32 sur le dessin.

Le volant est assemblé sur la colonne de direction par coulissement. Pour réaliser cet assemblage, la surface extérieure 32 du moyeu 4 est placée face à la face terminale 16 de la colonne de direction. Le volant est orienté autour de l'axe 12 de telle sorte qu'une nervure 26 se trouve à chaque fois face à un évidement 14 de manière à ce que le volant soit bien orienté dans l'habitacle du véhicule. La partie étroite d'une nervure 26 se trouve alors face à la partie large d'un évidement 14. En faisant alors coulisser le moyeu 4 le long de la zone de liaison 6 de la partie terminale de la colonne de direction, les nervures 26 entrent dans les évidements 14 correspondants. Les surfaces latérales 30 des nervures 26 viennent alors au contact des parois latérales 18 des évidements 14. Le positionnement du moyeu 4 par rapport à la partie terminale s'effectue automatiquement grâce à l'inclinaison des parois latérales 18 et des surfaces latérales 30. Grâce au rétrécissement des parois latérales 18 dans le sens longitudinal, on réalise le coincement des nervures 26 dans les évidements 14. L'inclinaison des parois latérales 18 dans le sens transversal (Cf figure 4) permet de centrer le moyeu du volant 4 sur la colonne de direction. Ainsi, l'axe du moyeu 4 vient coïncider avec l'axe de la partie terminale 2.

La profondeur des évidements 14, mesurée radialement, et la hauteur des nervures 26, mesurée également radialement, sont telles que les sommets 28 des nervures 26 ne viennent pas au contact des parois de fond 20 des évidements 14. De même, la surface extérieure de la partie terminale 2 située entre les évidements 14 ne vient pas au contact de la surface de l'alésage 8 située entre les nervures 26. Le contact entre le moyeu 4 du volant et la partie terminale 2 de la colonne de direction ne s'effectue alors qu'entre les parois latérales 18 des évidements 14 et les surfaces latérales 30 des nervures 26. De même, pour limiter le coulissement du moyeu 4 sur la zone de liaison 6, aucune butée n'est nécessaire. La largeur des nervures et des évidements 14, mesurée périphériquement est telle que les nervures 26 n'arrivent pas à la base du V formé par les parois latérales 18. La butée du moyeu 4 sur la colonne de direction se fait donc sur les parois latérales 18.

Une fois le moyeu du volant 4 mis en place sur la colonne de direction, aucun serrage n'est nécessaire. L'angle réalisé par les parois latérales, vu en vue de face sur la figure 3 par exemple, permet d'assurer un coincement des nervures 26. L'angle formé par les parois latérales 18 opposées d'un évidement 14 est par exemple d'environ 15°. Cet angle peut être par exemple l'angle fait entre les deux arêtes formant l'intersection entre la paroi de fond 20 d'un évidement et les parois latérales 18 de celui-ci ou bien les arêtes formant l'intersection entre les parois latérales 18 et l'enveloppe extérieure cylindrique de la colonne de direction au niveau de sa partie terminale 2. Bien entendu, on retrouve un angle comparable au niveau des surfaces latérales 30 des nervures 26.

Une fois le volant mis en place sur la colonne de direction, on réalise un coincement dès que les surfaces latérales des nervures 26 sont en contact avec les parois latérales 18 des évidements 14. Aucun jeu ne subsiste alors plus entre le volant et la colonne de direction. Aucun serrage n'est nécessaire pour supprimer un quelconque jeu. La géométrie décrite ci-dessus permet la suppression de tous les jeux entre la colonne de direction et le volant.

Bien entendu, un système de verrouillage est toutefois nécessaire. En effet, si une traction est exercée longitudinalement sur le volant, celui-ci pourra se libérer de la colonne de direction. Un système de verrouillage tel que par exemple décrit dans le document FR-A-2 775 036 peut alors être utilisé ici.

L'embout d'encliquetage 10 présente une surface d'extrémité 34 dont le diamètre externe est inférieur à la distance séparant deux nervures, plus précisément les sommets 28 de deux nervures 26 diamétralement opposées. Le centre de la surface d'extrémité 34 est plat et ses bords sont arrondis. Cette surface 34 se raccorde à une surface latérale 36 qui est en retrait par rapport à la surface 34.

Plus précisément, la surface 36 latérale est tronconique et elle se raccorde par son grand diamètre à la surface d'extrémité 34. A l'opposé de cette dernière, la surface latérale 36 se raccorde par son petit diamètre à la face terminale 16. L'embout d'encliquetage 10 est destiné à coopérer avec trois cales 38 disposées dans le moyeu 4. Du volant. Chacune des cales 38 présente une surface interne de même forme que la surface latérale 36 de l'embout d'encliquetage 10, une surface externe adaptée à la surface intérieure du moyeu 4. Les parois latérales des cales 38 sont adaptées à la forme de redents formés dans le moyeu 4 pour maintenir en place les cales 38.

Il est fait référence ici au document FR-2 775 036, notamment les figures 1 à 4 et la description correspondante, pour ce qui concerne les détails de réalisation du dispositif permettant l'encliquetage du moyeu 4 sur la partie terminale 2 de la colonne de direction. Une bague de déverrouillage, telle que décrite également dans ce document, peut également être prévue bien entendu.

La forme de réalisation par encliquetage telle que décrite ci-dessus est bien adaptée à la liaison selon l'invention décrite ici. En effet, cet encliquetage se réalise en même temps que la mise en place du moyeu 4 sur la colonne de direction. Le verrouillage et le positionnement se font donc simultanément.

De plus, il est possible de réaliser la partie terminale 2 telle que représentée sur les figures 3 à 5 par martelage. Il devient alors inutile de reprendre la pièce pour réaliser un filetage ou un taraudage qui seraient nécessaires pour une fixation à l'aide d'une vis ou d'un écrou.

La portée de la présente invention ne se limite pas aux détails de la forme de réalisation ci-dessus considérée à titre d'exemple non limitatif, mais s'étend au contraire aux modifications à la portée de l'homme de l'art, dans le cadre des revendications ci-après.

Ainsi, par exemple, le nombre d'évidements et de nervures pourrait être différent de six. Le nombre de ces nervures et évidements dépend du couple maximum à transmettre entre le volant et la colonne de direction.

Les moyens de verrouillage du moyeu sur la colonne de direction peuvent être simplement une vis ou un écrou. Il n'est pas nécessaire de prévoir un embout d'encliquetage et le dispositif de verrouillage correspondant. Tout moyen de fixation peut être envisagé ici.

## Revendications

1. Colonne de direction présentant une forme générale sensiblement cylindrique circulaire comportant un axe longitudinal (12) ainsi qu'une extrémité (2, 6) destinée à coopérer avec un moyeu (4) de volant en vue de la fixation du volant sur la colonne,
l'extrémité (2, 6) de la colonne destinée à coopérer avec le volant présente au moins deux évidements (14) longitudinaux sur sa surface extérieure, **caractérisée**
**en ce que** chaque évidement (14) présente une largeur, mesurée périphériquement, qui diminue en s'éloignant de l'extrémité libre de la colonne de direction, de telle sorte qu'en vue de côté de la colonne l'évidement (14) présente une forme en V.

2. Colonne de direction selon la revendication 1, **caractérisée en ce que** la largeur de chaque évidement (14), mesurée périphériquement, diminue également en se rapprochant de l'axe (12) de la colonne.

3. Colonne de direction selon la revendication 2, **caractérisée en ce que** les parois (18) de l'évidement se faisant face sont inclinées de telle sorte qu'en section transversale, ces parois forment un V tronqué dont la pointe se trouverait entre l'axe (12) de la colonne et l'évidement (14).

4. Colonne de direction selon la revendication 1, **caractérisée en ce que** l'angle formé par les branches du V est compris entre 5° et 25°.

5. Colonne de direction selon l'une des revendications 1 à 4, **caractérisée en ce que** chaque évidement (14) est symétrique par rapport à un plan (24) radial contenant l'axe de la colonne de direction.

6. Colonne de direction selon l'une des revendications 1 à 5, **caractérisée en ce que** les évidements sont (14) équi-répartis à la périphérie de son extrémité (2, 6).

7. Colonne de direction selon l'une des revendications 1 à 6, **caractérisée en ce qu'**elle comporte du côté de son extrémité libre un embout d'encliquetage (10) présentant une surface d'extrémité (34) se raccordant à une surface latérale (36) tronconique dont la base de plus grand diamètre se trouve du côté de l'extrémité libre de la colonne de direction.

8. Colonne de direction selon l'une des revendications 1 à 7, **caractérisée en ce qu'**elle est obtenue par martelage.

9. Volant de direction pour véhicule comportant un moyeu (4) présentant :
- un alésage (8) débouchant à l'extérieur du volant et adapté à recevoir par coulissement, depuis l'extérieur et suivant une direction axiale, une partie terminale (2) d'une colonne de direction que comporte le véhicule, et
- des moyens (38) permettant la fixation du volant sur la colonne de direction,
l'alésage (8) présente au moins deux nervures (26) s'étendant axialement à l'intérieur de l'alésage, **caractérisé**
**en ce que** chaque nervure (26) présente une largeur, mesurée périphériquement, qui diminue en s'éloignant de l'extrémité libre de la colonne de direction, de telle sorte qu'en vue de côté de la colonne la nervure présente une forme en V.

10. Volant selon la revendication 9, **caractérisé en ce que** la largeur de chaque nervure (26), mesurée périphériquement, diminue également en se rapprochant de l'axe (12) de l'alésage.

11. Volant selon la revendication 10, **caractérisé en ce que** les parois (30) de la nervure se faisant face sont inclinées de telle sorte qu'en section transversale, ces parois forment un V tronqué dont la pointe se trouverait entre l'axe (12) de l'alésage et la nervure (26).

12. Volant selon la revendication 9, **caractérisé en ce que** l'angle formé par les branches du V est compris entre 5° et 25°.

13. Volant selon l'une des revendications 9 à 12, **caractérisé en ce que** chaque nervure (26) est symétrique par rapport à un plan radial contenant l'axe de l'alésage.

14. Volant selon l'une des revendications 9 à 13, **caractérisé en ce que** les nervures (26) sont équi-réparties à la périphérie de l'alésage (8).

15. Volant selon l'une des revendications 9 à 14, **caractérisé en ce que** les moyens permettant la fixation du volant sur la colonne de direction comportent au moins une cale d'encliquetage (38) destinée à coopérer avec une partie terminale (2, 10) de la colonne de direction, un moyen élastique étant prévu au niveau de chaque cale d'encliquetage pour la précontraindre vers la colonne de direction en position verrouillée.

16. Système de direction pour véhicule, comportant :
- une colonne de direction présentant une forme générale sensiblement cylindrique circulaire comportant un axe longitudinal (12) ainsi qu'une extrémité (2, 6) destinée à coopérer avec un moyeu (4) de volant en vue de la fixation du volant sur la colonne, et
- un volant comportant un moyeu (4) présentant :
- un alésage (8) débouchant à l'extérieur du volant et adapté à recevoir par coulissement, depuis l'extérieur et suivant une direction axiale, une partie terminale (2,6) d'une colonne de direction que comporte le véhicule, et
- des moyens (38) permettant la fixation du volant sur la colonne de direction,
**caractérisé en ce que** la colonne de direction est une colonne selon l'une des revendications 1 à 8, et
**en ce que** le volant est un volant selon l'une des revendications 9 à 15.

17. Système de direction pour véhicule selon la revendication 16, **caractérisé en ce que** les évidements (14) réalisés sur la colonne de direction et les nervures (26) réalisées dans l'alésage (8) du moyeu du volant sont tels que d'une part les nervures (26) ne viennent pas au contact du fond (20) des évidements et d'autre part les zones pleines entre les évidements (14) ne viennent pas au contact de la paroi de l'alésage (8) sur laquelle sont disposées les nervures (26).

## Claims

1. Steering column of substantially circularly cylindrical general shape having a longitudinal axis (12) and an end (2, 6) that is adapted to cooperate with a steering wheel hub (4) to fix the steering wheel to the steering column and has at least two longitudinal recesses (14) on its exterior surface, **characterized in that** each recess (14) has a peripheral width that decreases in the direction away from the free end of the steering column so that in a side view of the column the recess (14) is V-shaped.

2. Steering column according to claim 1, **characterized in that** the peripheral width of each recess (14) also decreases in the direction toward the axis (12) of the column.

3. Steering column according to claim 2, **characterized in that** the facing walls (18) of the recess are inclined so that when seen in cross section these walls form a truncated V-shape whose apex is between the axis (12) of the column and the recess (14).

4. Steering column according to claim 1, **characterized in that** the angle formed by the branches of the V-shape is from 5° to 25°.

5. Steering column according to any of claims 1 to 4, **characterized in that** each recess (14) is symmetrical with respect to a radial plane (24) containing the axis of the steering column.

6. Steering column according to any of claims 1 to 5, **characterized in that** the recesses (14) are equi-angularly distributed at the periphery of its end (2, 6).

7. Steering column according to any of claims 1 to 6, **characterized in that** it comprises at its free end a clipping member (10) having an end surface (34) joined to a frustoconical lateral surface (36) whose larger diameter base is at the free end of the steering column.

8. Steering column according to any of claims 1 to 7, **characterized in that** it is hammered.

9. Vehicle steering wheel comprising a hub (4) having:
- a bore (8) opening to the exterior of the steering wheel, adapted to receive slidably from the outside and in an axial direction a terminal portion (2) of a steering column of the vehicle, and having at least two ribs (26) extending axially inside the bore, and
- means (38) for fixing the steering wheel to the steering column,
**characterized in that** each rib (26) has a peripheral width that reduces in the direction away from the free end of the steering column so that in a side view of the column the rib has a V-shape.

10. Steering wheel according to claim 9, **characterized in that** the peripheral width of each rib (26) also decreases in the direction toward the axis (12) of the bore.

11. Steering wheel according to claim 10, **characterized in that** the facing walls (30) of the rib are inclined so that when seen in cross section these walls form a truncated V-shape whose apex is between the axis (12) of the bore and the rib (26).

12. Steering wheel according to claim 9, **characterized in that** the angle formed by the branches of the V-shape is from 5° to 25°.

13. Steering wheel according to any of claims 9 to 12, **characterized in that** each rib (26) is symmetrical with respect to a radial plane containing the axis of the bore.

14. Steering wheel according to any of claims 9 to 13, **characterized in that** the ribs (26) are equi-angularly distributed at the periphery of the bore (8).

15. Steering wheel according to any of claims 9 to 14, **characterized in that** the means for fixing the steering wheel to the steering column comprise at least one wedge-shaped clip (38) adapted to cooperate with a terminal portion (2, 10) of the steering column, spring means being provided for each wedge-shaped clip to prestress it toward the steering column in the locked position.

16. Vehicle steering system comprising:
- a steering column of substantially circularly cylindrical general shape having a longitudinal axis (12) and an end (2, 6) that is adapted to cooperate with a steering wheel hub (4) to fix the steering wheel to the steering column, and
- a steering wheel comprising a hub (4) having:
- a bore (8) opening to the exterior of the steering wheel, adapted to receive slidably from the outside and in an axial direction a terminal portion (2, 6) of a steering column of the vehicle, and
- means (38) for fixing the steering wheel to the steering column,
**characterized in that** the steering column is a column according to any of claims 1 to 8 and **in that** the steering wheel is a steering wheel according to any of claims 9 to 15.

17. Vehicle steering system according to claim 16, **characterized in that** the recesses (14) on the steering column and the ribs (26) in the bore (8) of the hub of the steering wheel are such that the ribs (26) do not come into contact with the bottom (20) of the recesses and the solid regions between the recesses (14) do not come into contact with the wall of the bore (8) on which the ribs (26) are disposed.

## Patentansprüche

1. Lenksäule, die eine allgemeine Form aufweist, die im Wesentlichen kreisförmig zylindrisch ist, und eine Längsachse (12) sowie ein Ende (2, 6), das dazu bestimmt ist, mit einer Lenkradnabe (4) zusammenzuwirken, um das Lenkrad an der Säule zu befestigen, umfasst,
wobei das Ende (2, 6) der Säule, das dazu bestimmt ist, mit dem Lenkrad zusammenzuwirken, auf seiner äußeren Oberfläche wenigstens zwei longitudinale Aussparungen (14) aufweist,
**dadurch gekennzeichnet, dass** jede Aussparung (14) eine in Umfangsrichtung gemessene Breite aufweist, die mit zunehmendem Abstand vom freien Ende der Lenksäule abnimmt, so dass die Aussparung (14) in der Seitenansicht der Säule die Form eines V aufweist.

2. Lenksäule nach Anspruch 1, **dadurch gekennzeichnet, dass** die Breite jeder Aussparung (14) gemessen in Umfangsrichtung auch bei Annäherung an die Achse (12) der Säule abnimmt.

3. Lenksäule nach Anspruch 2, **dadurch gekennzeichnet, dass** die Wände (18) der Aussparung, die einander zugewandt sind, in der Weise geneigt sind, dass diese Wände im Querschnitt ein abgeschnittenes V bilden, dessen Spitze sich zwischen der Achse (12) der Säule und der Aussparung (14) befände.

4. Lenksäule nach Anspruch 1, **dadurch gekennzeichnet, dass** der von den Schenkeln des V gebildete Winkel im Bereich von 5° bis 25° liegt.

5. Lenksäule nach einem der Ansprüche 1 bis 4, **dadurch gekennzeichnet, dass** jede Aussparung (14) in Bezug auf eine radiale Ebene (24), die die Achse der Lenksäule enthält, symmetrisch ist.

6. Lenksäule nach einem der Ansprüche 1 bis 5, **dadurch gekennzeichnet, dass** die Aussparungen (14) auf dem Umfang ihres Endes (2, 6) gleich verteilt sind.

7. Lenksäule nach einem der Ansprüche 1 bis 6, **dadurch gekennzeichnet, dass** sie auf Seiten ihres freien Endes einen Einrastansatz (10) besitzt, der eine Stirnfläche (34) aufweist, die mit einer kegelstumpfförmigen seitlichen Oberfläche (36) verbunden ist, deren Basis mit größerem Durchmesser sich auf Seiten des freien Endes der Lenksäule befindet.

8. Lenksäule nach einem der Ansprüche 1 bis 7, **dadurch gekennzeichnet, dass** sie durch Hämmern erhalten wird.

9. Lenkrad für Fahrzeug, das eine Nabe (4) umfasst, die aufweist:
- eine Bohrung (8), die in die äußere Umgebung des Lenkrades mündet und so beschaffen ist, dass sie von außen und in einer axialen Richtung einen Endabschnitt (2) einer Lenksäule, die das Fahrzeug aufweist, gleitend aufnimmt, und
- Mittel (38), die die Befestigung des Lenkrades an der Lenksäule ermöglichen,
wobei die Bohrung (8) wenigstens zwei Rippen (26) aufweist, die in der Bohrung axial verlaufen,
**dadurch gekennzeichnet, dass** jede Rippe (26) eine in Umfangsrichtung gemessene Breite aufweist, die mit zunehmendem Abstand vom freien Ende der Lenksäule abnimmt, derart, dass die Rippe in einer Seitenansicht der Säule die Form eines V aufweist.

10. Lenkrad nach Anspruch 9, **dadurch gekennzeichnet, dass** die Breite jeder Rippe (26) gemessen in Umfangsrichtung auch bei Annäherung an die Achse (12) der Bohrung abnimmt.

11. Lenkrad nach Anspruch 10, **dadurch gekennzeichnet, dass** die Wände (30) der Rippe, die einander zugewandt sind, in der Weise geneigt sind, dass diese Wände im Querschnitt ein abgeschnittenes V bilden, dessen Spitze sich zwischen der Achse (12) der Bohrung und der Rippe (26) befände.

12. Lenkrad nach Anspruch 9, **dadurch gekennzeichnet, dass** der von den Schenkeln des V gebildete Winkel im Bereich von 5° bis 25° liegt.

13. Lenkrad nach einem der Ansprüche 9 bis 12, **dadurch gekennzeichnet, dass** jede Rippe (26) in Bezug auf eine radiale Ebene, die die Achse der Bohrung enthält, symmetrisch ist.

14. Lenkrad nach einem der Ansprüche 9 bis 13, **dadurch gekennzeichnet, dass** die Rippen (26) auf dem Umfang der Bohrung (8) gleich verteilt sind.

15. Lenkrad nach einem der Ansprüche 9 bis 14, **dadurch gekennzeichnet, dass** die Mittel, die die Befestigung des Lenkrades an der Lenksäule ermöglichen, wenigstens einen Einrastkeil (38) umfassen, der dazu bestimmt ist, mit einem Endabschnitt (2, 10) der Lenksäule zusammenzuwirken, wobei ein elastisches Mittel auf Höhe jedes Einrastkeils vorgesehen ist, um ihn in der verriegelten Position zur Lenksäule vorzubelasten.

16. Lenksystem für Fahrzeug, das umfasst:
- eine Lenksäule, die eine im Wesentlichen kreisförmig zylindrische allgemeine Form aufweist und eine Längsachse (12) sowie ein Ende (2, 6), das dazu bestimmt ist, mit einer Lenkradnabe (4) zusammenzuwirken, um das Lenkrad an der Säule zu befestigen, umfasst, und
- ein Lenkrad, das eine Nabe (4) umfasst, die aufweist:
- eine Bohrung (8), die in die äußere Umgebung des Lenkrades mündet und so beschaffen ist, dass sie von außerhalb und in einer axialen Richtung einen Endabschnitt (2, 6) einer Lenksäule, die das Fahrzeug aufweist, gleitend aufnehmen kann, und
- Mittel (38), die die Befestigung des Lenkrades an der Lenksäule ermöglichen,
**dadurch gekennzeichnet, dass** die Lenksäule eine Säule nach einem der Ansprüche 1 bis 8 ist und
dass das Lenkrad ein Lenkrad nach einem der Ansprüche 9 bis 15 ist.

17. Lenksystem für Fahrzeug nach Anspruch 16, **dadurch gekennzeichnet, dass** die an der Lenksäule ausgebildeten Aussparungen (14) und die in der Bohrung (8) der Nabe des Lenkrads ausgebildeten Rippen (26) derart sind, dass einerseits die Rippen (26) nicht mit dem Boden (20) der Aussparungen in Kontakt gelangen und andererseits die Vollzonen zwischen den Aussparungen (14) nicht mit der Wand der Bohrung (8), auf der die Rippen (26) angeordnet sind, in Kontakt gelangen.
